# DEMANDE DE BREVET EUROPEEN

(11) **EP 1 038 809 A1**
(43) Date de publication de la demande: **27.09.2000**
(21) Numéro de dépôt: 99490034.8
(22) Date de dépôt: 09.11.1999
(51) Int. Cl.: B65G 51/03

(54) **Elément de rail et dispositif de convoyage d'objets en position suspendue muni d'une succession de tels éléments de rail**

(30) Priorité: 13.11.1998 FR 9814432
(71) Demandeur: Rafale Technologie (société anonme), 76930 Octeville sur Mer (FR)
(72) Inventeur: Bernard, Frédéric, 59650 Villeneuve D'Ascq (FR); Butor, Didier, 59130 Lambersart (FR)
(74) Mandataire: Duthoit, Michel

(57) **Abrégé**

L'invention concerne un élément de rail (1) pour le convoyage d'objets, par exemple bouteilles, flacons ou similaires, comprenant des moyens (2) pour permettre sa fixation à une armature de soutien et des moyens (4) de support et/ou de guidage des objets à convoyer.

Selon l'invention, ledit élément de rail (1) est constitué d'au moins deux pièces distinctes (5, 6), s'étendant longitudinalement et coopérant l'une avec l'autre, lesdits moyens (2) pour permettre la fixation étant prévus au niveau de l'une (5) des pièces, dite pièce de fixation, et lesdits moyens (4) de support et/ou de guidage étant prévus au niveau de l'une (6) des autres, dite pièce de support et/ou de guidage.

L'invention concerne également un dispositif de convoyage d'objets en position suspendue muni d'une succession de tels éléments de rail (1).

## Description

L'invention concerne un élément de rail ainsi qu'un dispositif de convoyage d'objets en position suspendue muni d'une succession de tels éléments de rail.

Bien que plus particulièrement destinée au transport de bouteilles, flacons ou objets similaires, elle pourra être utilisée pour le transport de tous autres types d'objets, notamment en position suspendue.

Actuellement, dans le domaine du convoyage des bouteilles, il est connu de transporter celles-ci en position suspendue à l'aide d'un rail constitué de deux guides, sensiblement parallèles, entre lesquels les bouteilles circulent.

Les guides sont fixés au niveau d'un support par l'intermédiaire de clames, régulièrement réparties tout le long de la trajectoire.

Un premier inconvénient de tels rails est qu'ils peuvent difficilement être changés sans nécessiter la réalisation de réglage lors de la mise en place des rails de remplacement. Or dans les installations de convoyage, il s'agit d'un des types de pièces le plus soumis à l'usure et il est nécessaire de les changer de manière fréquente.

En outre, au niveau de la jonction entre deux guides contigus, la planéité du rail est difficile à réaliser.

Le but de la présente invention est de proposer un élément de rail qui pallie les inconvénients précités et dont l'interchangeabilité soit facilitée.

Un autre but de la présente invention est de proposer un élément de rail et un dispositif de convoyage d'objets en position suspendue munis de tels éléments de rail dont la planéité soit améliorée au niveau de leur zone de jonction.

Un autre but de la présente invention est de proposer un élément de rail et un dispositif de convoyage d'objets en position suspendue munis de tels éléments de rail dont le réglage de l'écartement soit facilité.

Un autre but de la présente invention est de proposer un élément de rail et un dispositif de convoyage d'objets en position suspendue munis de tels éléments de rail dont la structure soit renforcée sans toutefois pénaliser le démontage.

D'autres buts et avantages de l'invention apparaîtront au cours de la description qui va suivre qui n'est donnée qu'à titre indicatif et qui n'a pas pour but de la limiter.

L'invention concerne un élément de rail pour le convoyage d'objets, par exemple, bouteilles, flacons ou similaires, comprenant des moyens pour permettre sa fixation à une armature de soutien et des moyens de support et/ou de guidage des objets à convoyer, caractérisé par le fait que ledit élément de rail est constitué d'au moins deux pièces distinctes, s'étendant longitudinalement et coopérant l'une avec l'autre, lesdits moyens pour permettre la fixation étant prévus au niveau de l'une des pièces, dite pièce de fixation, et lesdits moyens de support et/ou de guidage étant prévus au niveau de l'une des autres pièces, dite pièce de support et/ou de guidage.

L'invention concerne également un dispositif pour le convoyage d'objets en position suspendue, par exemple, bouteilles, flacons ou similaires, muni d'une telle succession d'éléments de rail, prévus contigus.

L'invention sera mieux comprise à la lecture de la description suivante, accompagnée des dessins en annexe qui en font partie intégrante et parmi lesquels :
- la figure 1 décrit en perspective un exemple de réalisation de l'élément de rail conforme à l'invention, désassemblé,
- la figure 2 reprend la figure 1 précédente, l'élément de rail étant assemblé,
- la figure 3 est une vue de coupe partielle, en perspective, d'une portion d'un exemple de réalisation du dispositif de convoyage conforme à l'invention,
- la figure 4 illustre en vue de face, selon un plan axial de coupe, une partie repérée IV à la figure 3 précédente, le dispositif étant partiellement désassemblé et sa partie supérieure partiellement représentée.

L'invention concerne un élément de rail pour le convoyage d'objets, notamment en position suspendue.

Bien que plus particulièrement prévue pour des bouteilles, flacons ou objets similaires, elle pourra être utilisée pour tous autres types d'objets. Par 〈〈similaire〉〉, on entend, notamment, muni d'un goulot et/ou collerette.

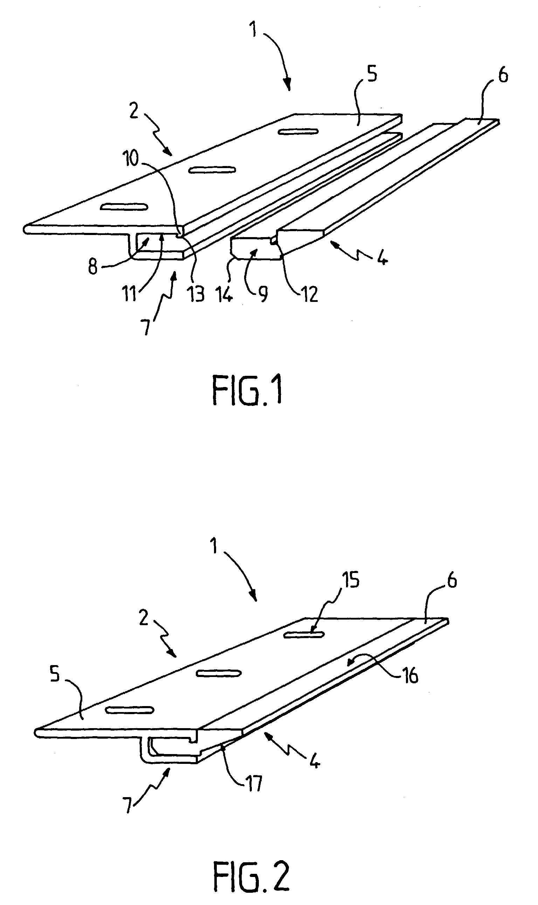

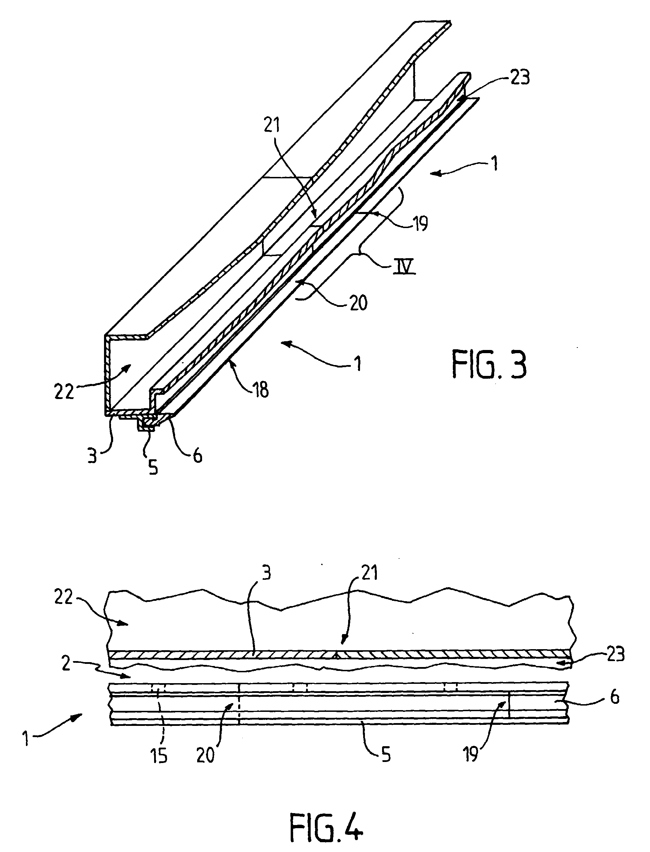

Comme illustré aux figures 1 et 2, l'élément de rail 1 conforme à l'invention comprend des moyens 2 pour permettre sa fixation à une armature de soutien, par exemple, repérée 3 aux figures 3 et 4, et des moyens 4 de support et/ou de guidage des objets à convoyer.

Ces derniers coopèrent avec l'élément de rail, notamment, selon un contact glissant par l'intermédiaire d'une protubérance prévue à leur périphérie. Dans le cas de bouteilles, flacons ou objets similaires, ladite protubérance est prévue, par exemple, au niveau de leur goulot. Elle est, notamment annulaire et/ou réalisée dans la masse de l'objet.

Selon l'invention, ledit élément de rail 1 est constitué d'au moins deux pièces distinctes, 5, 6, s'étendant longitudinalement et coopérant l'une avec l'autre.

Lesdits moyens 2 pour permettre la fixation sont prévus au niveau de l'une 5 des pièces, dite pièce de fixation et les moyens 4 de support et/ou de guidage sont prévus au niveau de l'une 6 des autres, dite pièce de support et/ou de guidage.

Ladite pièce de support et/ou de guidage 6 est ainsi facilement interchangeable, sans avoir à intervenir sur la liaison entre la pièce de fixation et son armature de soutien, dont les réglages peuvent être conservés.

Ledit élément de rail 1 comprend, par exemple, des moyens 7 d'emboîtement, notamment par encliquetage, desdites pièces 5, 6 les unes dans les autres.

Lesdits moyens d'emboîtement 7 sont constitués, par exemple, d'un logement 8, prévu sur l'une 5 des pièces, dite femelle, et d'un prolongement 9 de la pièce 6, dite mêle, coopérant avec ladite pièce femelle 5.

Ledit prolongement 9 est apte à être introduit dans ledit logement 8 et à y être maintenu, notamment, par au moins une nervure 10, prévue sur l'une 11 des faces du logement 8, ladite nervure 11 étant apte à coopérer avec une gorge 12, prévue en vis-à-vis dans ledit prolongement 9, après mise en place de ce dernier. La face 11 portant la ou les nervures 10 est, par exemple, la face supérieure dudit logement 8.

Ledit logement 8 et/ou ladite nervure 10 sont prévus, notamment, continus tout le long de ladite pièce femelle 5. Il en est éventuellement de même dudit prolongement 9 et/ou de ladite gorge 12.

La ou les arêtes en vis-à-vis des pièces mâle et femelle 5, 6 coopérant l'une avec l'autre pourront être biseautées sur l'une et/ou l'autre desdites pièces 5, 6. Dans l'exemple illsutré, c'est ainsi le cas des arêtes 13 ; 14.

Selon l'exemple de réalisation illustré, ladite pièce mâle est la pièce de guidage et/ou de support 6 et ladite pièce femelle est la pièce de fixation 5.

Lesdites pièces 5, 6 sont, par exemple, mono-matériaux. Lesdits moyens d'emboîtement, notamment ledit logement 8, ledit prolongement 9, ladite nervure 10 et/ou ladite gorge 12 sont, par exemple, réalisés dans la masse.

Pour permettre l'encliquetage, l'élasticité de la pièce femelle 5 est inférieure à l'élasticité de la pièce mâle 6. La première est constituée, par exemple, de polychlorure de vinyle (PVC) et/ou la seconde d'un matériau composite à base de fibres de verre et de matières plastiques, facilitant le glissement.

Lesdits moyens 2 pour permettre la fixation sont constitués, notamment, d'une pluralité d'orifices 15, répartis le long de la pièce de fixation 5. Ils sont, par exemple, oblongs afin de faciliter le réglage de l'écartement.

Lesdits moyens de guidage et/ou de support 4 sont constitués, par exemple, d'un dièdre présentant une surface inférieure 17 et une surface supérieure 16, notamment horizontale, destiné à coopérer avec l'éventuel protubérance des objets à convoyer. Ledit dièdre est éventuellement tronqué afin de faciliter le guidage.

Comme illustrée aux figures 3 et 4, l'invention concerne également un dispositif de convoyage d'objets en position suspendue muni d'une succession d'éléments de rail 1 tels que décrits plus haut, prévus contigus. Ces derniers définissent, par exemple, deux guides 18, sensiblement parallèles et entre lesquels les objets circulent.

Lesdites pièces de support et/ou de guidage 6 se succèdent, éventuellement, en des premiers lieux 19 décalés par rapport aux lieux 20 de succession desdites pièces de fixation 5. On assure ainsi la planéité de la trajectoire des objets à convoyer.

En outre, le dispositif conforme à l'invention comprenant, par exemple, une succession de tabliers 3 auxquels lesdits éléments de rail 1 sont assujettis grâce à leur dite pièce de fixation 5, notamment par boulonnage, on peut prévoir des lieux 21 de succession des tabliers 3 décalés par rapport aux lieux 20 des pièces de fixation 5. On renforce ainsi la cohésion du dispositif sans pour autant pénaliser son éventuelle facilité de démontage, compte tenu de la structure des éléments de rail 1 conformes à l'invention.

La longueur desdites pièces de guidage et/ou de support 6 est, par exemple, supérieure à celle des pièces de fixation 5 et/ou des tabliers 3, la longueur de ceux-ci étant éventuellement prévue identique.

Cela étant, selon l'exemple particulier de réalisation illustré, le dispositif de convoyage conforme à l'invention comprend une chambre de soufflage 22, apte à permettre la projection d'air, notamment par l'intermédiaire de fentes, non représentées, en direction des objets à transporter. Ladite chambre de soufflage 22 est fermée dans sa partie basse par ledit tablier 3 qui présente, par exemple, un canal 23 au niveau duquel sont situées lesdites fentes.

Lesdits guides 18 sont prévus de part et d'autre dudit canal 23. Les objets, dont une partie est introduite à l'intérieur dudit canal 23, notamment le goulot dans le cas de bouteilles, flacons ou similaires, sont ainsi suspendus au niveau desdits guides 18 par leur protubérance et propulsés sous l'action de l'air projeté.

Naturellement, d'autres modes de réalisation, à la portée de l'homme de l'art, auraient pu être envisagés sans pour autant sortir du cadre de l'invention.

## Revendications

1. Elément de rail (1) pour le convoyage d'objets, par exemple, bouteilles, flacons ou similaires, comprenant des moyens (2) pour permettre sa fixation à une armature de soutien (3) et des moyens (4) de support et/ou de guidage des objets à convoyer, caractérisé par le fait que ledit élément de rail est constitué d'au moins deux pièces distinctes (5, 6), s'étendant longitudinalement et coopérant l'une avec l'autre, lesdits moyens (2) pour permettre la fixation étant prévus au niveau de l'une (5) des pièces, dite pièce de fixation, et lesdits moyens (4) de support et/ou de guidage étant prévus au niveau de l'une (6) des autres, dite pièce de support et/ou de guidage.

2. Elément selon la revendication 1 comprenant des moyens (7) d'emboîtement desdites pièces les unes dans les autres.

3. Elément selon la revendication 2, dans lequel lesdits moyens d'emboîtement sont constitués d'un logement (8), prévu sur l'une (5) des pièces, dite femelle, et d'un prolongement (9), de la pièce (6), dite mâle, coopérant avec ladite pièce femelle, ledit prolongement (9) étant apte à être introduit dans ledit logement (8) et à y être maintenu par au moins une nervure (10), prévue sur l'une (11) des faces du logement (8) et apte à coopérer avec une gorge (12) prévue en vis-à-vis dans ledit prolongement (9), après mise en place de ce dernier.

4. Elément selon la revendication 3, dans lequel ledit logement (8) et/ou ladite nervure (10) sont prévus continus tout le long de ladite pièce femelle (5).

5. Elément selon la revendication 3, dans lequel la ou les arêtes (13 ; 14) en vis-à-vis des pièces mâle et femelle coopérant l'une avec l'autre sont biseautées sur l'une et/ou l'autre desdites pièces (5, 6).

6. Elément selon la revendication 3, dans lequel ladite pièce mâle est la pièce de guidage et/ou de support (6) et la dite pièce femelle est la pièce de fixation (5).

7. Elément selon la revendication 3, dans lequel ladite pièce femelle (5) est constituée de PVC.

8. Elément selon la revendication 1, dans lequel lesdits moyens (2) pour permettre la fixation sont constitués d'une pluralité d'orifices (15), répartis le long de la pièce de fixation (5).

9. Dispositif de convoyage d'objets en position suspendue, par exemple bouteilles, flacons ou similaires, muni d'une succession d'éléments de rail (1) selon la revendication 1, prévus contigus.

10. Dispositif selon la revendication 9 dans lequel lesdites pièces de support et/ou de guidage (6) se succèdent en des premiers lieux (19) décalés par rapport aux lieux (20) de succession desdites pièces de fixation (5).
